# EUROPÄISCHE PATENTSCHRIFT

(11) **EP 0 750 025 B1**
(45) Veröffentlichungstag und Bekanntmachung des Hinweises auf die Patenterteilung: **03.02.1999**
(21) Anmeldenummer: 96109333.3
(22) Anmeldetag: 11.06.1996
(51) Int. Cl.: C09D 5/03, C09D 133/04, C08F 8/08

(54) **Wärmehärtbare pulverförmige Beschichtungsmasse**
Heat curable powder coating composition
Composition de revêtement en poudre thermodurcissable

(30) Priorität: 23.06.1995 DE 19522952; 09.04.1996 DE 19614008
(43) Veröffentlichungstag der Anmeldung: 27.12.1996
(73) Patentinhaber: EMS-INVENTA AG, 8002 Zürich (CH)
(72) Erfinder: Reich, Albert, 7014 Trin (CH); Kaplan, Andreas, Dr.rer.nat., 7000 Chur (CH); Gisler, René, 7000 Chur (CH)
(74) Vertreter: Becker, Eberhard

(56) Entgegenhaltungen:
- DE-B- 1 208 075
- CHEMICAL ABSTRACTS, vol. 103, no. 22, 2.Dezember 1985 Columbus, Ohio, US; abstract no. 179115, XP002016954 & JP-A-60 079 006 (KANEGAFUCHI CHEM IND CO LTD)

## Beschreibung

Die Erfindung betrifft den in den Patentansprüchen angegebenen Gegenstand.

Die Erfindung betrifft insbesondere ein neues Verfahren zur Herstellung von Pulverlacken auf Basis von epoxidgruppenhaltigen Acrylat-Copolymerisaten.Neben diesen speziellen glycidylestergruppenhaltigen Acrylat-Copolymere enthalten die Pulverlacke geeignete Härtungsmittel und/oder Pigmente und/oder Füllstoffe und/oder Additive.

Epoxidgruppenhaltige Acrylat-Copolymerisate und deren Verwendung als Bindemittel in Pulverlacken sind bereits bekannt. Beispielhaft seien die folgenden Patente genannt: US 3,781,379, US 4,042,645 und US 4,346,144. Als Härter kommen dabei mehrbasische Säuren, bevorzugt zweibasische Säuren, deren Anhydride oder Substanzen, die eine zweibasische Säure unter Härtungsbedingungen bilden, zur Anwendung. Als Härter können prinzipiell auch andere carboxylfunktionelle Verbindungen, wie z.B. amorphe und/oder semikristalline Polyesterharze und/oder Acrylatharze mit freien Carboxylgruppen verwendet werden.

Die in den oben genannten Patenten beschriebenen Copolymerisate enthalten alle Glycidylacrylat bzw. Glycidylmethacrylat, der Rest des Copolymeren besteht aus anderen ungesättigten Monomeren, d.h. es handelt sich um glycidylesterhaltige Acrylat-Copolymere.
Die Herstellung von monomerem Glycidyl(meth)acrylat ist aus technischer Sicht nicht einfach, da Glycidyl(meth)acrylat leicht polymerisiert, und die Isolation der reinen Monomeren sehr problematisch ist. Nebst einer kurzen Lagerstabilität von Glycidyl(meth)acrylat, bereitet auch dessen hohe Toxizität bei der Verarbeitung Probleme. Deshalb ist die Herstellung von glycidyl-esterhaltigen Acrylatpolymeren mittels Copolymerisation von Glycidyl(meth)acrylat problematisch und daher nicht empfehlenswert. Ein weiterer Nachteil dieses Verfahrens ist, daß man Wasser als Reaktionsmedium nicht verwenden kann.

US 3,294,769 beschreibt in allgemeiner Form ein Verfahren zur Herstellung von glycidylestergruppenhaltigen Acrylatpolymeren durch Umsetzung von carboxylfunktionellen Acrylatpolymeren mit Epichlorhydrin. Die Eigenschaften und Verwendungsmöglichkeiten dieser glycidylesterhaltigen Acrylatpolymeren werden jedoch nicht beschrieben.

Die Verseifung von Methylmethacrylat-Polymeren und die anschließende Umsetzung mit Epichlorhydrin ist von Sandner et al. (siehe Angew. Makromol. Chemie 181 (1990) 171 bis 182 und Makromol. Chemie 192 (1991) 762 bis 777) untersucht und beschrieben worden. Verwendungsmöglichkeiten dieser Produkte sind nicht genannt.

Aus der DE-A-25 07 126 ist ein pulverförmiges Überzugsmittel bekannt aus einer Mischung aus
(A) einem Copolymeren, welches Glycidylgruppen enthält und ein Copolymerisat von mehreren ethylenisch ungesättigten Verbindungen ist mit relativ niedrigem Molekulargewicht,
(B) mindestens einer aliphatischen Dicarbonsäure in einer Menge, die 0,8-1,1 Säuregruppen pro Epoxygruppe des Copolymeren entspricht, und
(C) einem Härtungsbeschleuniger in Form einer organischen Base, gegebenenfalls
(D) einem Flußregelungsmittel in einer Menge von wenigstens 0,05 Gew.-% der Mischung, das ein Polymer mit einem Molekulargewicht (Mₙ) von wenigstens 1000 ist und eine Glasübergangstemperatur aufweist, die um wenigstens 50°C niedriger ist als die Glasübergangstemperatur des Copolymeren (A) ist, und üblichen Zusätzen, wobei die Komponente (A) aus 80 bis 96 Gew.-% epoxyd- und hydroxylgruppenhaltigen Mischpolymerisaten, die Erweichungspunkte nach Durran von etwa 90-120°C besitzen und in organischen Lösungsmitteln löslich sind, aus
   a) 6-24 Gew.-% ethylenisch ungesättigten Epoxydmonomeren mit 6-12 Kohlenstoffatomen,
   b) 4-20 Gew.-% Hydroxyalkylester der Acryl- oder Methacrylsäure, wobei die Hydroxyalkylestergruppe gesättigt ist und 2-4 Kohlenstoffatome enthält,
   c) 10-80 Gew.-% Acryl- oder Methacrylsäureester von aliphatischen gesättigten Monoalkoholen mit 1-8 Kohlenstoffatomen, und
   d) 10-60 Gew.-% Styrol oder Vinyltoluol,
und die Komponente (B) aus 4-20 Gew.-% eines Adduktes einer gesättigten geradkettigen alipathischen Dicarbonsäure der Formel

HOOC-(CH₂)ₙ-COOH

wobei n eine ganze Zahl von 4 bis 11 ist, und 2,4,6-Tris(N',N",N‴-Dimethylaminomethyl)-phenol, wobei diese Komponenten des Adduktes im Gewichtsverhältnis von 97:3 bis 99:1 vorliegen können, besteht.

Es ist daher Aufgabe der Erfindung ein einfaches Verfahren zur Herstellung von Pulverlacken auf Basis von glycidylestergruppenhaltigen Acrylat-Copolymerisaten bereitzustellen, wobei auf die Verwendung von Glycidyl(meth)acrylat bei der Herstellung von glycidylestergruppenhaltigen Acrylat-Copolymerisaten aus verfahrenstechnischen und toxikologischen Gründen verzichtet werden soll.

Diese Aufgabe wird durch das Verfahren nach Anspruch 1 gelöst. In den Unteransprüchen sind vorteilhafte Ausführungsformen der Erfindung enthalten.

Insbesondere wird ein Verfahren zur Herstellung von Pulverlacken auf Basis von epoxidgruppenhaltigen Acrylat-Copolymerisaten bereitgestellt, dadurch gekennzeichnet, daß man in einem ersten Schritt carboxyfunktionelle Acrylat-Copolymerisate (D) durch radikalische Copolymerisation herstellt und anschließend mit Epihaloalkanen zu glycidylesterhaltigen Acrylat-Copolymerisaten (A) umsetzt und durch gemeinsame Extrusion von Komponente (A) mit Komponente (B): einer aliphatischen und/oder cycloaliphatischen mehrbasischen Säure und/oder deren Anhydrid und/oder einem polyolmodifizierten Anhydrid einer mehrbasischen Säure und/oder amorphem oder semikristallinem carboxyfunktionellem Copolyesterharz und/oder carboxyfunktionellen Acrylatharzen und ggf.zusätzlichen Pigmenten und/oder Füllstoffen und/oder Additiven (C) zu einem Pulverlack verarbeitet.

Desweiteren wird ein nach dem erfindungsgemäßen Verfahren hergestellter Pulverlack gemäß Anspruch 17 sowie die Verwendung des Pulverlacks zur Herstellung von Schutzschichten gemäß Anspruch 18 bereitgestellt.

Die Molekulargewichte (Mw) der erfindungsgemäß hergestellten epoxidgruppenhaltigen Acrylat-Copolymere betragen im allgemeinen 1.000 bis 30.000. Die Glasübertragungstemperatur liegt im Bereich von 20 bis 120 °C und die Epoxidzahl im Bereich von 0,018 bis 0,510 [Äquiv./100 g].

Die erfindungsgemäß hergestellten Pulverlacke enthalten:
(A) ein glycidylestergruppenhaltiges Acrylat-Copolymerisat als Bindemittel,
(B) eine aliphatische und/oder cycloaliphatische mehrbasische Säure und/oder deren Anhydrid und/oder ein polyolmodifiziertes Anhydrid einer mehrbasischen Säure und/oder amorphe oder semikristalline carboxylfunktionelle Copolyesterharze und/oder carboxylfunktionelle Acrylharze als Härtungsmittel,
(C) gegebenenfalls Füllstoffe und/oder Pigmente und/oder Additive nach dem Stand der Technik,
   wobei das glycidylesterhaltige Acrylat-Copolymerisat ein Molekulargewicht (Mw) von 1.000 bis 30.000 und eine Glasumwandlungstemperatur von 20 bis 120 °C besitzt und dadurch hergestellt wurde, daß in einem ersten Schritt ein Copolymer (D) hergestellt wird, das Carboxylgruppen enthält, welches dann anschließend in weiteren Schritten durch die Umsetzung mit Epihaloalkanen in das epoxidgruppenhaltige Acrylat-Copolymerisat (A) übergeführt wird, wobei insbesondere das Copolymere (D) durch Copolymerisation eines Monomerengemisches aus:
   (a) 0 bis 70 Gew.-Teilen Methyl(meth)acrylat,
   (b) 0 bis 60 Gew.-Teilen (Cyclo)Alkylestern der Acryl- und/oder Methacrylsäure mit 2 bis 18 Kohlenstoffatomen im Alkyl- bzw. im Cycloalkylrest,
   (c) 0 bis 90 Gew.--Teilen Vinylaromaten,
   (d) 1 bis 70 Gew.-Teilen olefinisch ungesättigten Carbonsäuren,
   erhältlich ist, wobei die Summe der Gewichtsteile der Komponenten (a) bis (d) 100 ergibt.

Bevorzugt sind carboxylfunktionelle Acrylat-Copolymere mit einer Säurezahl von 10 bis 400 mg KOH/g.

Bei den Monomeren (b) handelt es sich vorzugsweise um (Cyclo)Alkylester der Acryl- oder Methacrylsäure mit 2 bis 18 Kohlenstoffatomen im (Cyclo)Alkylrest. Beispiele geeigneter bzw. bevorzugt geeigneter Monomere (b) sind Ethyl(meth)acrylat, n-Propyl(meth)acrylat, Isopropyl(meth)acrylat, n-Butyl(meth)acrylat, Isobutyl(meth)acrylat, tert.-Butyl(meth)acrylat, 2-Ethylhexyl(methyl)acrylat, Cyclohexylmethacrylat, Neopentylmethacrylat, Isobornylmethacrylat, 3,3,5-Trimethylcyclohexylmethacrylat und Stearylmethacrylat.

Als Monomere (c) kommen z.B. Styrol, Vinyltoluol und α-Ethylstyrol in Betracht. Beispiele für (d) sind Acryl- und Methacrylsäure. Bevorzugt können Crotonsäure, Itaconsäure, Fumarsäure, Maleinsäure und Citraconsäure eingesetzt werden.

Die Herstellung der Copolymerisate kann durch Copolymerisation der genannten Monomere (a) bis (d) nach üblichen radikalischen Polymerisationsverfahren erfolgen, wie beispielsweise Lösungs-, Emulsions-, Perl- oder Substanzpolymerisation. Dabei werden die Monomere bei Temperaturen von 60 bis 160 °C, vorzugsweise 80 bis 150 °C, in Gegenwart von Radikalbildnern und gegebenenfalls Molekulargewichtsreglern copolymerisiert.

Die Herstellung der carboxylfunktionellen Acrylat-Copolymerisate erfolgt in inerten Lösungsmitteln. Geeignete Lösungsmittel sind beispielsweise Aromaten, wie Benzol Toluol, Xylol; Ester, wie Ethylacetat, Butylacetat, Hexylacetat, Heptylacetat, Methylglykolacetat, Ethylglykolacetat, Methoxypropylacetat; Ether, wie Tetrahydrofuran, Dioxan, Diethylenglykoldimethylether; Ketone, wie Aceton, Methylethylketon, Methylisobutylketon, Methyl-n-amylketon, Methylisoamylketon oder beliebige Gemische derartiger Lösungsmittel.

Die Herstellung der Copolymerisate kann kontinuierlich oder diskontinuierlich erfolgen. Üblicherweise wird in einen Polymerisationsreaktor gleichmäßig und kontinuierlich die Monomerenmischung und der Initiator eindosiert und gleichzeitig die entsprechende Menge Polymerisat kontinuierlich abgeführt. Vorzugsweise können so chemisch nahezu einheitliche Copolymere hergestellt werden. Chemisch nahezu einheitliche Copolymere können auch hergestellt werden, indem man die Reaktionsmischung mit konstanter Geschwindigkeit in einem Rührkessel einlaufen läßt, ohne das Polymerisat abzuführen.

Man kann auch einen Teil der Monomeren in Lösungsmittel der genannten Art vorlegen, und die restlichen Monomeren und Hilfsmittel getrennt oder gemeinsam in diese Vorlage bei der Reaktionstemperatur eintragen.

Im allgemeinen erfolgt die Polymerisation unter Atmosphärendruck, sie kann jedoch auch bei Drücken bis zu 25 bar durchgeführt werden. Die Initiatoren werden in Mengen von 0,05 bis 15 Gew.-%, bezogen auf die Gesamtmenge der Monomeren, eingesetzt.

Geeignete Initiatoren sind übliche Radikalstarter, wie z.B. aliphatische Azoverbindungen, wie Azodiisobuttersäurenitril, Azo-bis-2-methylvaleronitril, 1,1'-Azo-bis-1-cyclohexannitril und 2,2'-Azo-bis-isobuttersäurealkylester, symmetrische Diacylperoxide, wie z.B. Acetyl-, Propionyl- oder Butyrylperoxid, mit Brom-, Nitro-, Methyl- oder Methoxygruppen substituierte Benzoylperoxide, Laurylperoxide; symmetrische Peroxydicarbonate, z.B. tert.-Butylperbenzoat; Hydroperoxide, wie beispielsweise tert.-Butylhydroperoxid, Cumolhydroperoxid; Dialkylperoxide, wie Dicumylperoxid, tert.-Butylcumylperoxid oder Di-tert.-butylperoxid.

Zur Regelung des Molekulargewichts der Copolymerisate können übliche Regler bei der Herstellung eingesetzt werden. Beispielhaft genannt seien Mercaptopropionsäure, tert.-Dodecylmercaptan, n-Dodecylmercaptan oder Diisopropylxanthogendisulfid. Die Regler können in Mengen von 0,1 bis 10 Gew.-%, bezogen auf die Gesamtmenge der Monomeren, zugegeben werden.

Die bei der Copolymerisation anfallenden Lösungen der Copolymerisate können dann ohne weitere Aufbereitung dem Ausdampfungs- bzw. Entgasungsprozeß zugeführt werden, bei dem das Lösungsmittel beispielsweise in einem Ausdampfextruder oder Sprühtrockner bei etwa 120 bis 160 °C und einem Vakuum von 100 bis 300 mbar entfernt, und die erfindungsgemäß zu verwendenden Copolymerisate gewonnen werden.

Die Umsetzung der carboxylfunktionellen Copolymerisate (D) mit Epihaloalkanen zu den erfindungsgemäßen epoxidgruppenhaltigen Acrylat-Copolymeren (A) erfolgt in der für die Herstellung von Glycidylestern üblichen Art.

Die Glycidylester von carboxylfunktionellen Acrylat-Copolymeren erhält man sehr rasch, indem man das carboxylfunktionelle Acrylat-Copolymer in einem Überschuß von Epihaloalkan löst. Danach wird ein Katalysator zum Reaktionsgemisch dazugegeben und bei erhöhter Temperatur über eine genügend lange Zeit gerührt, bis alle Carboxylgruppen reagiert haben. Beispielhaft sei eine Zeitperiode von einer Stunde genannt. Danach wird das Reaktionsgemisch mit Wasser gewaschen, um den Katalysator zu entfernen. Das überschüssige Epihaloalkan und das Dihaloalkan wird dann entfernt, z.B. durch Vakuumdestillation (z.B. 5 mm Hg) bei geeigneten Temperaturen, z.B. 95°C. Geeignete Katalysatoren sind quarternäre Phosphonium- oder Ammoniumsalze wie Benzyltrimethylammoniumbromid, Tetramethylammoniumbromid, Benzyltrimethylammoniumchlorid, Ethyltriphenylphosphoniumbromid oder Gemische der vorgenannten Katalysatoren. Bevorzugt wird jedoch Benzyltrimethylammoniumbromid eingesetzt.

Bei diesem Verfahren rührt man bei erhöhten Temperaturen, wie z.B. 100 °C.

Der geeignete Temperaturbereich liegt zwischen 70 °C und etwa 180 °C, bevorzugt zwischen 100 und 130 °C.

Geeignete Epihaloalkane sind 1-Chloro-2,3-epoxypropan (Epichlorhydrin), 1-Chloro-2-methyl-2,3-epoxypropan und 1-Chloro-2,3-epoxybutan. Bevorzugt wird 1-Chloro-2,3-epoxypropan eingesetzt. Natürlich können auch noch weitere Epihaloalkane erfolgreich eingesetzt werden, wie z.B. Epibromhydrin.

Das Entfernen des überschüssigen Epihaloalkans erfolgt bei diesem Prozeß durch Vakuumdestillation, z.B. bei 5 mm Hg, wobei das Vakuum von 0,01 mm Hg bis 700 mm Hg reichen kann.

Epoxidgruppenhaltige Acrylat-Copolymere können auch hergestellt werden durch die Reaktion von carboxylfunktionellen Acrylat-Copolymeren mit einem Epihalohydrin, wodurch die Halohydrinester des carboxylfunktionellen Acrylat-Copolymeren gebildet wird mit anschließender Dehydrohalogenierung des Polyhalohydrinesters mit einer geeigneten Lauge, z.B. Natronlauge.

Ein anderer geeigneter Prozeß basiert auf der Reaktion eines Salzes, bevorzugt ein Alkalisalz des carboxylfunktionellen Acrylat-Copolymeren, mit einem Epihalohydrin, bevorzugt Epichlorhydrin.

Die epoxidgruppenhaltigen Acrylat-Copolymere (A) besitzen eine Glasübergangstemperatur von 20 bis 120 °C. Die Molekulargewichte (Mw) betragen im allgemeinen 1.000 bis 30.000. Die Epoxidzahl der erfindungsgemäßen epoxidgruppenhaltigen Acrylat-Copolymere liegt im Bereich von 0,018 bis 0,510 [Äquiv./100 g].

Als Härtungsmittel - Komponente (B) - wird vorzugsweise eine gesättigte aliphatische Carbonsäure mit 4 bis 12 C-Atomen oder eine cycloaliphatische Dicarbonsäure mit 8 bis 15 C-Atomen eingesetzt. Mehr bevorzugt können aliphatische mehrbasische Säuren, bevorzugt zweibasische Säuren, wie z.B. Adipinsäure, Pimelinsäure, Suberinsäure, Azelainsäure, Sebacinsäure, Malonsäure, Bernsteinsäure, Glutarsäure, 1,12-Dodecandisäure usw. verwendet werden. Die Anhydride dieser Säuren können ebenfalls verwendet werden, z.B. Glutarsäureanhydrid, Bernsteinsäureanhydrid sowie die Polyanhydride dieser Dicarbonsäuren. Diese Polyanhydride werden durch intermolekulare Kondensation der genannten aliphatischen zweibasischen Dicarbonsäuren erhalten.

Beispiele sind Adipinsäure(poly)anhydrid, Azelainsäure(poly)anhydrid, Sebacinsäure(poly)anhydrid, Dodecandisäure(poly)anhydrid usw. Die Polyanhydride haben ein Molekulargewicht (Gewichtsmittel, bezogen auf Polystyrolstandard) von 1.000 bis 5.000. Die Polyanhydride können auch mit Polyol modifiziert werden.

Die Polyanhydride können auch im Gemisch mit den aliphatischen zweibasischen Dicarbonsäuren als Härtungsmittel eingesetzt werden oder im Gemisch mit Hydroxycarbonsäuren, die Schmelzpunkte zwischen 40 und 150 °C besitzen, z.B. 12-Hydroxy-Stearinsäure, 2- bzw. 3- bzw. 10-Hydroxyoctadecansäure, 2-Hydroxymyristinsäure.

Auch cycloaliphatische Dicarbonsäuren, wie z.B. 1,4-Cyclohexandicarbonsäure oder deren Polyanhydride können als Härtungsmittel verwendet werden.

Geeignete Härtungsmittel sind auch amorphe und semikristalline carboxylfunktionelle Copolyester.

Sowohl die amorphen als auch die semikristallinen carboxylfunktionellen Copolyester können nach den für Polyestern bekannten Kondensationsverfahren (Veresterung und/oder Umesterung) nach Stand der Technik hergestellt werden. Auch geeignete Katalysatoren, wie z.B. Dibutylzinnoxid oder Titantetrabutylat können gegebenenfalls verwendet werden. Geeignete amorphe carboxylfunktionelle Copolyesterharze besitzen eine Säurezahl von 10 bis 200 [mg KOH/g] und eine Glasübertragungstemperatur von > 40 °C. Amorphe carboxylfunktionelle Copolyester enthalten als Säurekomponenten hauptsächlich aromatische mehrbasische Carbonsäuren, wie z.B. Terephthalsäure, Isophthalsäure, Phthalsäure, Pyromellithsäure, Trimellithsäure, 3,6-Dichlorphthalsäure, Tetrachlorphthalsäure und soweit verfügbar deren Anhydrid, Chlorid oder Ester. Meistens enthalten sie mindestens 50 Mol-% Terephthalsäure und/oder Isophthalsäure, bevorzugt 80 Mol-%. Der Rest der Säuren (Differenz zu 100 Mol-%) besteht aus aliphatischen und/oder cycloaliphatischen mehrbasischen Säuren, wie z.B. 1,4-Cyclohexandicarbonsäure, Tetrahydophthalsäure, Hexahydroendomethylenterephthalatsäure, Hexachlorophthalsäure, Azelainsäure, Sebacinsäure, Decandicarbonsäure, Adipinsäure, Dodecandicarbonsäure, Bernsteinsäure, Maleinsäure oder dimere Fettsäuren. Hydroxycarbonsäuren und/oder Lactone, wie z.B. 12-Hydroxystearinsäure, ε-Caprolacton oder Hydroxypivalinsäureester des Neopentylglykols, können ebenfalls verwendet werden. In geringen Mengen kommen auch Monocarbonsäuren, wie z.B. Benzoesäure, tert.-Butylbenzoesäure, Hexahydrobenzoesäure und gesättigte aliphatische Monocarbonsäuren zum Einsatz.

Als geeignete Alkoholkomponenten seien aliphatische Diole genannt, wie z.B. Ethylenglykol, 1,3-Propandiol, 1,2-Propandiol, 1,2-Butandiol, 1,3-Butandiol, 1,4-Butandiol, 2,2-Dimethylpropandiol-1,3 (Neopentylglykol), 2,5-Hexandiol, 1,6-Hexandiol, 2,2-[Bis-(4-hydroxycyclohexyl)]propan, 1,4-Dimethylolcyclohexan, Diethylenglykol, Dipropylenglykol und 2,2-Bis-[4-(2-hydroxy)]phenylpropan. In geringeren Mengen kommen auch Polyole zum Einsatz, wie z.B. Glycerol, Hexantriol, Pentaerytritol, Sorbitol, Trimethylolethan, Trimethylolpropan und Tris(2-hydroxy)isocyanurat. Auch Epoxyverbindungen können anstelle von Diolen oder Polyolen verwendet werden. Bevorzugt beträgt der Anteil an Neopentylglykol und/oder Propylenglykol in der Alkoholkomponente mindestens 50 Mol-%, bezogen auf Gesamtsäuren.

Geeignete semikristalline Polyesterharze besitzen eine Säurezahl von 10 bis 400 [mg KOH/g] und einen genau definierten DSC-Schmelzpunkt. Es handelt sich bei den semikristallinen Polyestern um Kondensationsprodukte aus aliphatischen Polyolen, bevorzugt aliphatischen Diolen und aliphatischen und/oder cycloaliphatischen und/oder aromatischen mehrbasischen Carbonsäuren, bevorzugt zweibasische Säuren. Beispielhaft seien als aliphatische Polyole genannt: Ethylenglykol (1,2-Ethandiol), Propylenglykol (1,3-Propandiol, Butylenglykol (1,4-Butandiol), 1,6-Hexandiol, Neopentylglykol, Cyclohexandimethanol, Trimethylolpropan usw. Bevorzugt sind aliphatische Diole, wie z.B. Ethylenglykol, Butylenglykol oder 1,6-Hexandiol.

Geeignete mehrbasische Carbonsäuren sind aliphatische Dicarbonsäuren, bevorzugt C₄-C₂₀-Dicarbonsäuren, wie z.B. Adipinsäure, Azelainsäure, Sebacinsäure, Dodecandicarbonsäure, Bernsteinsäure, Undecandicarbonsäure und aromatische Dicarbonsäuren, wie z.B. Terephthalsäure, Isophthalsäure, Phthalsäure und deren Hydrierungsprodukte, wie z.B. 1,4-Cyclohexandicarbonsäure. Bevorzugt sind aliphatische Dicarbonsäuren mit 6 bis 12 Kohlenstoffatomen. Natürlich können auch Mischungen verschiedener Polyole und mehrbasischen Carbonsäuren verwendet werden.

Geeignete carboxylfunktionelle Acrylatharze besitzen eine Säurezahl von 10 bis 400 [mg KOH/g]. Die Zusammenfassung und Herstellung ist analog zum carboxylfunktionellen Acrylat-Copolymerisat (D).

Auch Gemische verschiedener geeigneter Härter können in den wärmehärtbaren pulverförmigen Beschichtungsmassen verwendet werden.

Die Menge der als Härtungsmittel - Komponente (B) - eingesetzten Anhydride und Säuren, bezogen auf das Acrylharz, kann über einen weiten Bereich variieren und richtet sich nach der Anzahl der Epoxidgruppen im Acrylatharz. Im allgemeinen wird ein Molverhältnis von Carboxylgruppen bzw. Anhydridgruppen zu Epoxidgruppen von 0,4 bis 1,4:1, bevorzugt von 0,8 bis 1,2:1 gewählt.

Für die erfindungsgemäße Herstellung der Pulverlacke können übliche Pigmente und/oder Füllstoffe und/oder Additive zugesetzt werden.

Dabei handelt es sich um Additive aus der Gruppe Beschleuniger, Verlauf- und Entgasungsmittel, Hitze-, UV- und/oder HALS-Stabilisatoren und/oder Tribo-additive sowie erforderlicherweise um Mattierungsmittel, wie z.B. Wachse.

Die Herstellung der erfindungsgemäßen Pulverlacke erfolgt vorzugsweise in der Schmelze durch gemeinsame Extrusion sämtlicher Formulierungsbestandteile bei Temperaturen zwischen 60 bis 140 °C. Das Extrudat wird anschließend abgekühlt, gemahlen und auf eine Korngröße kleiner 90 µm abgesiebt. Grundsätzlich sind auch andere Verfahren zur Herstellung der Pulverlacke geeignet, wie z.B. Vermischen der Formulierungsbestandteile in Lösung und anschließende Ausfällung oder destillative Entfernung der Lösemittel.

Die Applikation der erfindungsgemäßen Pulverlacke erfolgt nach den für Pulverlacke üblichen Verfahren, z.B. mittels elektrostatischer Sprühvorrichtungen (Corona oder Tribo) oder nach dem Wirbelbett-Verfahren.

Die Herstellung und die Eigenschaften der erfindungsgemäßen wärmehärtbaren pulverförmigen Pulverlacke werden nachfolgend beispielhaft dargestellt.

### Herstellung der carboxylfunktionellen Acrylat-Copolymere

### Beispiele 1 und 2

### Allgemeine Herstellvorschrift

In einem Edelstahlreaktor mit Rühr-, Kühl- und Heizvorrichtung sowie elektronischer Temperatursteuerung wird Teil I (siehe Tabelle 1) vorgelegt und unter Stickstoff aufgeheizt bis zum Rückfluß. Dann werden parallel Teil II und Teil III (siehe Tabelle 1) langsam innerhalb von 3 Stunden zugegeben, wobei das Reaktionsgemisch unter Rückfluß gekocht wird. Nachdem die Zugabe von Teil II und Teil III beendet ist, wird das Reaktionsgemisch für weitere 2 Stunden unter Rückfluß gekocht. Anschließend wird das Lösungsmittel unter Vakuum aus dem Reaktionsgemisch entfernt.

**Tabelle 1**

| Carboxylgruppenhaltige Acrylat-Copolymere (Gewichtsangaben in g) | | |
|---|---|---|
| | Beispiel 1 | Beispiel 2 |
| Harz-Nr. | I | II |
| Teil I | | |
| Xylol | 1000,00 | 1000,00 |
| Teil II | | |
| Di-tert.-butylperoxid | 46,25 | 46,25 |
| Xylol | 78,75 | 78,75 |
| Teil III | | |
| Methacrylsäure | 355,43 | 284,44 |
| n-Butylacrylat | 185,00 | 185,00 |
| Methylmethacrylat | 962,69 | 1033,69 |
| Styrol | 809,38 | 809,38 |
| Mercaptopropionsäure | 57,90 | 57,90 |

**Tabelle 2**

| Eigenschaften Beispiele 1 und 2 | | |
|---|---|---|
| | Beispiel 1 | Beispiel 2 |
| Harz-Nr. | I | II |
| Säurezahl [mg KOH/g] | 97,6 | 78,5 |
| Tg [°C] (berechnet) | 95 | 93 |
| Molekulargewicht (Mw) | 7900 | 7800 |

### Herstellung der erfindungsgemäßen epoxidgruppenhaltigen Acrylat-Copolymeren

### Beispiele 3 bis 6

### Beispiel 3

In einen beheizbaren Drei-Liter-Reaktor, versehen mit Thermometer, Rührer und Rückflußkolonne werden 1850 g Epichlorhydrin und 560 g Harz-Nr. I gegeben. Danach wird die Temperatur auf 100 °C erhöht. Nachdem die Temperatur 100 °C erreicht hat, gibt man 18,6 g Benzyltrimethylammoniumchlorid zu der homogenen Lösung. Die Lösung wird dann während 1 Stunde bei 100 °C gerührt und danach auf Raumtemperatur abgekühlt. Die organische Phase wird mit Wasser (3 x 1.400 mℓ) gewaschen und nach Vakuumdestillation bei einer Temperatur von 95 °C unter vermindertem Druck (1 mm Hg) erhält man Harz-Nr. III (Eigenschaften siehe Tabelle 3).

### Beispiel 4

In einen beheizbaren Sechs-Liter-Reaktor, versehen mit Thermometer, Rührer und Rückflußkolonne werden 925 g Epichlorhydrin und 560 g Harz-Nr. I gegeben. Danach wird die Temperatur auf 100 °C erhöht. Nachdem die Temperatur 100 °C erreicht hat, gibt man 18,6 g Benzyltrimethylammoniumchlorid zu der homogenen Lösung. Die Lösung wird dann während 1 Stunde bei 100 °C gerührt und danach auf 50 °C abgekühlt. Nach Zugabe von 2000 g Toluol gibt man 190 g Natronlauge (22 %ig) hinzu und rührt bei 50 °C für eine weitere Stunde. Danach wird die wäßrige Phase abgetrennt. Nach der Vakuumdestillation der organischen Phase bei einer Temperatur von 130 °C unter vermindertem Druck (1 mm Hg) erhält man Harz-Nr. IV (Eigenschaften siehe Tabelle 3).

### Beispiel 5

In einen beheizbaren Drei-Liter-Reaktor, versehen mit Thermometer, Rührer und Rückflußkolonne werden 1850 g Epichlorhydrin und 700 g Harz-Nr. II gegeben. Danach wird die Temperatur auf 100 °C erhöht. Nachdem die Temperatur 100 °C erreicht hat, gibt man 18,6 g Benzyltrimethylammoniumchlorid zu der homogenen Lösung. Die Lösung wird dann während 1 Stunde bei 100 °C gerührt und danach auf Raumtemperatur abgekühlt. Die organische Phase wird mit Wasser (3 x 1.400 mℓ) gewaschen und nach Vakuumdestillation bei einer Temperatur von 95 °C unter vermindertem Druck (1 mm Hg) erhält man Harz-Nr. V (Eigenschaften siehe Tabelle 3).

### Beispiel 6

In einen beheizbaren Sechs-Liter-Reaktor, versehen mit Thermometer, Rührer und Rückflußkolonne werden 925 g Epichlorhydrin und 700 g Harz-Nr. II gegeben. Danach wird die Temperatur auf 100 °C erhöht. Nachdem die Temperatur 100 °C erreicht hat, gibt man 18,6 g Benzyltrimethylammoniumchlorid zu der homogenen Lösung. Die Lösung wird dann während 1 Stunde bei 100 °C gerührt und danach auf 50 °C abgekühlt. Nach Zugabe von 2000 g Toluol gibt man 190 g Natronlauge (22 %ig) hinzu und rührt bei 50 °C für eine weitere Stunde. Danach wird die wäßrige Phase abgetrennt. Nach der Vakuumdestillation der organischen Phase bei einer Temperatur von 130 °C unter vermindertem Druck (1 mm Hg) erhält man Harz-Nr. VI (Eigenschaften siehe Tabelle 3).

**Tabelle 3**

| Eigenschaften Beispiele 4 bis 6 | | | | |
|---|---|---|---|---|
| | Beispiel 3 | Beispiel 4 | Beispiel 5 | Beispiel 6 |
| Harz-Nr. | III | IV | V | VI |
| Ausgangsharz | I | I | II | II |
| E-Zahl [Äquiv./100 g] | 0,145 | 0,146 | 0,118 | 0,116 |
| Tg [°C] (berechnet) | 70 | 71 | 72 | 73 |
| Molekulargewicht (Mw) | 7900 | 7900 | 7800 | 7800 |
| E-Zahl = Epoxidzahl | | | | |

### Herstellung der Pulverlacke

### Beispiele 7 und 8

845 Gew.-Teile der Harze III oder Harz IV, 150 Gew.-Teile Dodecandicarbonsäure und 5 Gew.-Teile Benzoin werden in einem Henschelmischer bei 700 Upm während 30 sek trocken gemischt und anschließend auf einem Buss-Co-Kneter (PLK 46) bei einer Manteltemperatur von 100 °C, gekühlter Schnecke und einer Schneckenumdrehung von 150 Upm extrudiert. Das Extrudat wird gekühlt, gemahlen und auf kleiner als 90 µm abgesiebt.

Die Pulverlacke werden elektrostatisch (Corona- oder Tribo) auf Aluminiumbleche (Q-panel AL-36 5005 H 14/08 (0,8 mm)) appliziert und bei einer Einbrenntemperatur von 200 °C und einer Einbrennzeit von 15 min ausgehärtet.

Tabelle 4 zeigt die lacktechnischen Eigenschaften der Beispiele 7 bis 10.

### Beispiele 9 und 10

875 Gew.-Teile der Harze V oder Harz VI, 120 Gew.-Teile Dodecandicarbonsäure und 5 Gew.-Teile Benzoin werden in einem Henschelmischer bei 700 Upm während 30 Sekunden trocken gemischt und anschließend auf einem Buss-Co-Kneter (PLK 46) bei einer Manteltemperatur von 100 °C, gekühlter Schnecke und einer Schneckenumdrehung von 150 Upm extrudiert. Das Extrudat wird gekühlt, gemahlen und auf kleiner als 90 µm abgesiebt.

Die Pulverlacke werden elektrostatisch (Corona- oder Tribo) auf Aluminiumbleche (Q-panel AL-36 5005 H 14/08 (0,8 mm)) appliziert und bei einer Einbrenntemperatur von 200 °C und einer Einbrennzeit von 15 min ausgehärtet.

Tabelle 4 zeigt die lacktechnischen Eigenschaften der Beispiele 7 bis 10.

**Tabelle 4**

| | Beispiel 7 | Beispiel 8 | Beispiel 9 | Beispiel 10 |
|---|---|---|---|---|
| Harzbasis | III | IV | V | VI |
| Gelierzeit Kofler-Bank 200 °C | 31 | 30 | 28 | 29 |
| Glanz (60 °C DIN 67530) | 109 | 108 | 108 | 109 |
| Verlauf | sehr gut | sehr gut | sehr gut | sehr gut |
| Erichsentiefung (DIN 53156) (mm) | 9,9 | 9,8 | 9,8 | 9,9 |
| Gitterschnitt (DIN 52151) | 0 | 0 | 0 | 0 |
| Impact (ASTM D 2794, rückseitig) | 30 | 40 | 30 | 20 |

## Patentansprüche

1. Verfahren zur Herstellung von Pulverlacken auf Basis von epoxidgruppenhaltigen Acrylat-Copolymerisaten, dadurch gekennzeichnet, daß man in einem ersten Schritt carboxyfunktionelle Acrylat-Copolymerisate (D) durch radikalische Copolymerisation herstellt und anschließend mit Epihaloalkanen zu glycidylesterhaltigen Acrylat-Copolymerisaten (A) umsetzt und durch gemeinsame Extrusion von Komponente (A) mit Komponente (B): einer aliphatischen und/oder cycloaliphatischen mehrbasischen Säure und/oder deren Anhydrid und/oder einem polyolmodifizierten Anhydrid einer mehrbasischen Säure und/oder amorphem oder semikristallinem carboxyfunktionellem Copolyesterharz und/oder carboxyfunktionellen Acrylatharzen und
ggf.zusätzlichen Pigmenten und/oder Füllstoffen und/oder Additiven (C) zu einem Pulverlack verarbeitet.

2. Verfahren gemäß Anspruch 1, dadurch gekennzeichnet, daß man die radikalische Copolymerisation bei Temperaturen von 60 bis 160°C und unter Atmosphärendruck, vorzugsweise bei Drücken bis zu 25 Bar, in Gegenwart von Radikalbildnern und wahlweise 0,1 - 10 Gew.-% Molekulargewichtsreglern, bezogen auf die Gesamtmenge der Monomeren, durchführt.

3. Verfahren nach Anspruch 1 und 2, dadurch gekennzeichnet, daß die radikalische Copolymerisation als Lösungs- oder Substanzpolymerisation durchgeführt wird.

4. Verfahren nach einem oder mehreren der Ansprüche 1 bis 3, dadurch gekennzeichnet, daß die radikalische Copolymerisation kontinuierlich durch gleichmässiges Eindosieren des Monomerengemisches und von Radikalbildnern und kontinuierliches Abführen des Copolymerisates erfolgt oder diskontinuierlich unter konstanter Zugabe des Monomerengemisches in ein Rührgefäß erfolgt.

5. Verfahren nach einem oder mehreren der Ansprüche 1 bis 4, dadurch gekennzeichnet, daß man als Epihaloalkan eine Verbindung aus der Gruppe aus 1-Chloro-2,3-epoxypropan(Epichlorhydrin), 1-Chloro-2-methyl-2,3-epoxypropan, 1-Chloro-2,3-epoxybutan, 1-Chloro-2,3-epoxypropan, Epibromhydrin einsetzt.

6. Verfahren nach einem oder mehreren der Ansprüche 1 bis 5, dadurch gekennzeichnet, daß man als Katalysator quaternäre Phosphonium- oder Ammoniumverbindungen aus der Gruppe aus Benzyltrimethylammoniumbromid, Tetramethylammoniumbromid, Benzyltrimethylammoniumchlorid, Ethyltriphenylphosphoniumbromid oder Gemische davon einsetzt, wobei Benzyltrimethylammoniumbromid bevorzugt ist.

7. Verfahren nach einem oder mehreren der vorhergehenden Ansprüche 1 bis 6, dadurch gekennzeichnet, daß das carboxylfunktionelle Acrylat-Copolymerisat (D) durch Copolymerisation eines Monomerengemisches aus:
(a) 0 bis 70 Gew.-Teilen Methyl(meth)acrylat,
(b) 0 bis 60 Gew.-Teilen Alkyl- oder Cycloalkylester der Acryl- und/ oder Methacrylsäure mit 2 bis 18 C-Atomen,
(c) 0 bis 90 Gew.-Teilen Vinylaromaten,
(d) 1 bis 70 Gew.-Teilen olefinisch ungesättigten Carbonsäuren erhältlich ist, wobei die Summe der Gewichtsteile der Komponenten (a) bis (d) 100 ergibt, und wobei die Komponenten (a) und/oder (b) zwingend sind.

8. Verfahren nach Anspruch 7, dadurch gekennzeichnet, daß das carboxylfunktionelle Acrylat-Copolymerisat (D) eine Säurezahl von 10-400 mg KOH/g aufweist.

9. Verfahren gemäß einem oder mehreren der vorhergehenden Ansprüche 1 bis 8, dadurch gekennzeichnet, daß man als Komponente (B) eine gesättigte aliphatische Carbonsäure mit 4 bis 12 C-Atomen oder eine cycloaliphatische Dicarbonsäure mit 8 bis 15 C-Atomen einsetzt.

10. Verfahren gemäß einem oder mehreren der vorhergehenden Ansprüche 1 bis 8, dadurch gekennzeichnet, daß man als Komponente (B) ein monomeres oder polymeres oder polyolmodifiziertes Anhydrid einer aliphatischen oder cycloaliphatischen Dicarbonsäure einsetzt.

11. Verfahren gemäß einem oder mehreren der vorhergehenden Ansprüche 1 bis 8, dadurch gekennzeichnet, daß als Komponente (B) ein amorphes, carboxylfunktionelles Copolyesterharz mit einer Säurezahl von 10 bis 200 mg KOH/g und einer Glasumwandlungstemperatur von > 40°C eingesetzt wird.

12. Verfahren gemäß einem oder mehreren der vorhergehenden Ansprüche 1 bis 8, dadurch gekennzeichnet, daß als Komponente (B) ein semikristallines carboxylfunktionelles Copolyesterharz mit einer Säurezahl von 10 bis 400 mg KOH/g eingesetzt wird.

13. Verfahren gemäß einem oder mehreren der vorhergehenden Ansprüche 1 bis 8, dadurch gekennzeichnet, daß als Komponente (B) ein carboxylfunktionelles Acrylatharz mit einer Säurezahl von 10 bis 400 mg KOH/g eingesetzt wird.

14. Verfahren gemäß einem oder mehreren der vorhergehenden Ansprüche, dadurch gekennzeichnet, daß Komponente (B) in einer Menge vorhanden ist, die 0,4 bis 1,4, insbesondere 0,8 bis 1,2, Carboxylgruppen und/oder Anhydridgruppen pro Epoxidgruppe am glycidylesterhaltigen Acrylat-Copolymerisat (A) entspricht.

15. Verfahren gemäß einem oder mehreren der vorhergehenden Ansprüche, dadurch gekennzeichnet, daß das epoxidgruppenhaltige Acrylat-Copolymerisat (A) Epoxidzahlen im Bereich von 0,018 bis 0,510 (Aquiv. / 100 g), aufweist.

16. Verfahren gemäß einem oder mehreren der vorhergehenden Ansprüche, dadurch gekennzeichnet, daß man durch gemeinsame Extrusion sämtlicher Formulierungsbestandteile sowie von den üblichen Pigmenten und/oder Füllstoffen und/oder Additiven bei Temperaturen zwischen 60 und 140°C ein Extrudat herstellt, dieses anschließend abkühlt, mahlt und auf eine Korngröße von < 90µm absiebt.

17. Pulverlack hergestellt nach dem Verfahren nach einem oder mehreren der vorhergehenden Ansprüche.

18. Verwendung des Pulverlacks nach Anspruch 17 zur Herstellung von Schutzschichten.

## Claims

1. Process for preparing powder coatings based on acrylate copolymers containing epoxide groups, characterized in that, in a first step, carboxy-functional acrylate copolymers (D) are prepared by free-radical copolymerization and are then reacted with epihaloalkanes to give acrylate copolymers (A) containing glycidyl ester and, by coextrusion of component (A) with component (B): an aliphatic and/or cycloaliphatic polybasic acid and/or anhydride thereof and/or a polyol-modified anhydride of a polybasic acid and/or amorphous or semicrystalline carboxy-functional copolyester resin and/or carboxy-functional acrylate resins and
optionally additional pigments and/or fillers and/or additives (C), are processed to give a powder coating.

2. Process according to Claim 1, characterized in that the free-radical copolymerization is conducted at temperatures of from 60 to 160°C and under atmospheric pressure, preferably at pressures of up to 25 bar, in the presence of free-radical initiators and optionally 0.1-10 % by weight of molecular weight regulators, based on the overall amount of the monomers.

3. Process according to Claim 1 and 2, characterized in that the free-radical copolymerization is conducted as a solution polymerization or bulk polymerization.

4. Process according to one or more of Claims 1 to 3, characterized in that the free-radical copolymerization is carried out continuously by metered addition at a uniform rate of the monomer mixture and of free-radical initiators and continuous removal of the copolymer, or discontinuously with constant addition of the monomer mixture to a stirred vessel.

5. Process according to one or more of Claims 1 to 4, characterized in that the epihaloalkane employed is a compound from the group consisting of 1-chloro-2,3-epoxypropane (epichlorohydrin), 1-chloro-2-methyl-2,3-epoxypropane, 1-chloro-2,3-epoxybutane. and epibromohydrin.

6. Process according to one or more of Claims 1 to 5, characterized in that use is made as catalyst of quaternary phosphonium or ammonium compounds from the group consisting of benzyltrimethylammonium bromide, tetramethylammonium bromide, benzyltrimethylammonium chloride, ethyltriphenylphosphonium bromide or mixtures thereof, preferably benzyltrimethylammonium bromide.

7. Process according to one or more of the preceding Claims 1 to 6, characterized in that the carboxy-functional acrylate copolymer (D) is obtainable by copolymerization of a monomer mixture consisting of:
(a) from 0 to 70 parts by weight of methyl (meth)acrylate,
(b) from 0 to 60 parts by weight of alkyl or cycloalkyl esters of acrylic and/or methacrylic acid having 2 to 18 C atoms,
(c) from 0 to 90 parts by weight of vinylaromatic compounds,
(d) from 1 to 70 parts by weight of olefinically unsaturated carboxylic acids, the sum of the parts by weight of components (a) to (d) being 100 and components (a) and/or (b) being compulsory.

8. Process according to Claim 7, characterized in that the carboxy-functional acrylate copolymer (D) has an acid number of 10-400 mg of KOH/g.

9. Process according to one or more of the preceding Claims 1 to 8, characterized in that use is made as component (B) of a saturated aliphatic carboxylic acid having 4 to 12 C atoms or of a cycloaliphatic dicarboxylic acid having 8 to 15 C atoms.

10. Process according to one or more of the preceding Claims 1 to 8, characterized in that use is made as component (B) of a monomeric or polymeric or polyol-modified anhydride of an aliphatic or cycloaliphatic dicarboxylic acid.

11. Process according to one or more of the preceding Claims 1 to 8, characterized in that use is made as component (B) of an amorphous, carboxy-functional copolyester resin having an acid number of from 10 to 200 mg of KOH/g and a glass transition temperature of > 40°C.

12. Process according to one or more of the preceding Claims 1 to 8, characterized in that use is made as component (B) of a semicrystalline carboxy-functional copolyester resin having an acid number of from 10 to 400 mg of KOH/g.

13. Process according to one or more of the preceding Claims 1 to 8, characterized in that use is made as component (B) of a carboxy-functional acrylate resin having an acid number of from 10 to 400 mg of KOH/g.

14. Process according to one or more of the preceding claims, characterized in that component (B) is present in an amount corresponding to from 0.4 to 1.4, in particular from 0.8 to 1.2, carboxyl groups and/or anhydride groups per epoxide group on the acrylate copolymer (A) containing glycidyl ester.

15. Process according to one or more of the preceding claims, characterized in that the acrylate copolymer (A) containing epoxide groups has epoxide numbers in the range from 0.018 to 0.510 (equivalents/100 g).

16. Process according to one or more of the preceding claims, characterized in that an extrudate is produced by coextrusion of all of the formulation constituents and of the customary pigments and/or fillers and/or additives at temperatures between 60 and 140°C, this extrudate is subsequently cooled and ground, and the ground extrudate is sieved to a particle size of < 90 µm.

17. Powder coating prepared by the process according to one or more of the preceding claims.

18. Use of the powder coating according to Claim 17 for producing protective coats.

## Revendications

1. Procédé de production de laques en poudre à base de copolymères d'acrylate portant des groupes époxyde, caractérisé en ce qu'on prépare dans une première étape des copolymères d'acrylate (D) à fonction carboxy par copolymérisation radicalaire, puis on les fait réagir avec des épihalogénalcanes pour former des copolymères d'acrylate (A) contenant un ester de glycidyle et, par extrusion commune du composant (A) avec un composant (B) qui est : un polyacide aliphatique et/ou cycloaliphatique et/ou son anhydride et/ou un anhydride, modifié par un polyol, d'un polyacide et/ou une résine de copolyester à fonction carboxy amorphe ou semicristalline et/ou des résines d'acrylate à fonction carboxy et,
le cas échéant avec addition de pigments et/ou de charges et/ou d'additifs (C),
on transforme le produit en une laque en poudre.

2. Procédé suivant la revendication 1, caractérisé en ce qu'on conduit la copolymérisation radicalaire à des températures de 60 à 160°C et sous pression atmosphérique, de préférence à des pressions allant jusqu'à 25 bars, en présence de générateurs de radicaux et, en option, de 0,1 à 10 % en poids de régulateurs de poids moléculaire, par rapport à la quantité totale des monomères.

3. Procédé suivant les revendications 1 et 2, caractérisé en ce qu'on conduit la copolymérisation radicalaire comme polymérisation en solution ou en substance.

4. Procédé suivant une ou plusieurs des revendications 1 à 3, caractérisé en ce qu'on conduit la copolymérisation radicalaire en continu par introduction régulière du mélange de monomères et des générateurs de radicaux et décharge continue du copolymère ou bien on la conduit en discontinu avec addition constante du mélange de monomères dans un récipient d'agitation.

5. Procédé suivant une ou plusieurs des revendications 1 à 4, caractérisé en ce qu'on utilise comme épihalogénalcane un composé du groupe du 1-chloro-2,3-époxypropane (épichlorhydrine), du 1-chloro-2-méthyl-2,3-époxypropane, du 1-chloro-2,3-époxybutane et de l'épibromhydrine.

6. Procédé suivant une ou plusieurs des revendications 1 à 5, caractérisé en ce qu'on utilise comme catalyseur des composés de phosphonium ou d'ammonium quaternaire du groupe du bromure de benzyltriméthylammonium, du bromure de tétraméthylammonium, du chlorure de benzyltriméthylammonium, du bromure d'éthyltriphénylphosphonium ou des mélanges de ces composés, avec une préférence pour le bromure de benzyltriméthylammonium.

7. Procédé suivant une ou plusieurs des revendications 1 à 6 précédentes, caractérisé en ce que le copolymère d'acrylate (D) à fonction carboxyle est obtenu par copolymérisation d'un mélange de monomères comprenant :
(a) 0 à 70 parties en poids de (méth)acrylate de méthyle,
(b) 0 à 60 parties en poids d'ester d'alkyle ou de cycloalkyle d'acide acrylique et/ou méthacrylique ayant 2 à 18 atomes de carbone,
(c) 0 à 90 parties en poids de composés vinylaromatiques,
(d) 1 à 70 parties en poids d'acides carboxyliques à non-saturation oléfinique, la somme des parties en poids des composants (a) à (d) étant égale à 100, et les composants (a) et/ou (b) étant obligatoirement présents.

8. Procédé suivant la revendication 7, caractérisé en ce que le copolymère d'acrylate (D) à fonction carboxy présente un indice d'acide de 10 à 400 mg de KOH/g.

9. Procédé suivant une ou plusieurs des revendications 1 à 8, caractérisé en ce qu'on utilise comme composant (B) un acide carboxylique aliphatique saturé ayant 4 à 12 atomes de carbone ou un acide dicarboxylique cycloaliphatique ayant 8 à 15 atomes de carbone.

10. Procédé suivant une ou plusieurs des revendications 1 à 8 précédentes, caractérisé en ce qu'on utilise comme composant (B) un anhydride, monomère ou polymère ou modifié par un polyol, d'un acide dicarboxylique aliphatique ou cycloaliphatique.

11. Procédé suivant une ou plusieurs des revendications 1 à 8 précédentes, caractérisé en ce qu'on utilise comme composant (B) une résine copolyester amorphe à fonction carboxyle ayant un indice d'acide de 10 à 200 mg de KOH/g et une température de transition vitreuse supérieure à 40°C.

12. Procédé suivant une ou plusieurs des revendications 1 à 8 précédentes, caractérisé en ce qu'on utilise comme composant (B) une résine copolyester à fonction carboxyle semicristalline ayant un indice d'acide de 10 à 400 mg de KOH/g.

13. Procédé suivant une ou plusieurs des revendications 1 à 8 précédentes, caractérisé en ce qu'on utilise comme composant (B) une résine d'acrylate à fonction carboxyle ayant un indice d'acide de 10 à 400 mg de KOH/g.

14. Procédé suivant une ou plusieurs des revendications précédentes, caractérisé en ce que le composant (B) est présent en une quantité qui correspond à 0,4-1,4, en particulier à 0,8-1,2 groupe carboxyle et/ou groupe anhydride par groupe époxyde porté par le copolymère d'acrylate (A) contenant un ester de glycidyle.

15. Procédé suivant une ou plusieurs des revendications précédentes, caractérisé en ce que le copolymère d'acrylate (A) contenant un groupe époxyde présente des indices d'époxyde dans la plage de 0,018 à 0,510 (équivalent/100 g).

16. Procédé suivant une ou plusieurs des revendications précédentes, caractérisé en ce qu'on produit par extrusion commune de tous les constituants de la formulation ainsi que des pigments et/ou des charges et/ou des additifs usuels, à des températures comprises entre 60 et 140°C, un extrudat qui est ensuite refroidi, broyé et tamisé à des diamètres de grains inférieurs à 90 µm.

17. Laque en poudre produite par le procédé suivant une ou plusieurs des revendications précédentes.

18. Utilisation de la laque en poudre suivant la revendication 17 pour la production de couches de protection.
